# EUROPÄISCHE PATENTANMELDUNG

(11) **EP 1 659 365 A1**
(43) Veröffentlichungstag der Anmeldung: **24.05.2006**
(21) Anmeldenummer: 05024750.1
(22) Anmeldetag: 12.11.2005
(51) Int. Cl.: G01C 11/02, G01C 21/20

(54) **Verfahren zur autonomen Beschaffung einer kartografischen Darstellung des Einsatzraumes einer militärischen Einheit**

(30) Priorität: 17.11.2004 DE 102004055480
(71) Anmelder: EADS Deutschland GmbH, 85521 Ottobrunn (DE)
(72) Erfinder: Staudenmaier, Gerd, 88090 Immenstaad (DE); Franzen, Stefan, 88250 Weingarten (DE)
(74) Vertreter: Meel, Thomas

(57) **Zusammenfassung**

Die Erfindung betrifft ein Verfahren zur autonomen Beschaffung einer kartografischen Darstellung des Einsatzraumes einer militärischen Einheit mit folgenden Verfahrensschritten:
- die militärische Einheit startet eine Mikrodrohne (MD), ausgestattet mit Lage- und Positionssensor, welche autonom entlang einer vorprogrammierten Flugroute den darzustellenden Einsatzraum abfliegt, wobei mit einer senkrecht nach unten gerichteten optischen Digitalkamera in aufeinander folgenden Aufnahmen der Einsatzraum lückenlos erfasst wird,
- nach selbständiger Rückkehr der Mikrodrohne (MD) an den Ausgangspunkt werden die von der Mikrodrohne gesammelten Daten vor Ort in einen tragbaren Rechner eingelesen und unter Verwendung der Lage- und Positionsdaten zu einem georeferenzierten Gesamtbild des Einsatzraums zusammengesetzt,
- das georeferenzierte Gesamtbild des Einsatzraums wird in das persönliche mobile Navigationssystem einer oder mehrerer Mitglieder der militärischen Einheit geladen, in dem es in gleicher Weise wie eine digitale Karte nutzbar ist.

## Beschreibung

Die Erfindung betrifft ein Verfahren zur autonomen Beschaffung einer kartografischen Darstellung einer militärischen Einheit.

Insbesondere in militärischen Out-of Area-Einsätzen in Gebieten, in denen kein Kartenmaterial mit ausreichender
- Auflösung (bzw. ausreichendem Maßstab) und
- Aktualität (bis in den Bereich von Stunden oder darunter; Erfassung von temporär vorhandenen Checkpoints, Sperren, Fahrzeuge etc)
   bereitsteht, ist für die militärische Einheit (z.B. eine Gruppe von Infanteristen) die Einsehbarkeit des unmittelbaren Einsatzbereichs (Nahbereich) und die Bewegungsfähigkeit darin stark eingeschränkt.

Für den Fall der Unterstützung der Gruppe durch Aufklärungseinheiten spezieller Kräfte muss diese Unterstützungsmaßnahme eigens vorher geplant und verfügbar gemacht werden. Hierdurch ergibt sich jedoch keine autonome Handlungsfähigkeit der Gruppe in ihrem Auftragsgebiet und eine lange Vorlaufzeit.

Der Erfindung liegt deshalb die Aufgabe zugrunde, eine Verfahren abzugeben, mit der die Gruppe am Einsatzort autonom alle für die kartographische Darstellung des Einsatzraums notwendigen Daten kurzfristig Zeit beschaffen kann.

Diese Aufgabe wird mit dem Verfahren nach Patentanspruch 1 gelöst. Vorteilhafte Ausbildungen sind Gegenstand von Unteransprüchen.

Die Erfindung hat insbesondere die folgenden Vorteile:
- die Gruppe im Einsatz vor Ort besitzt vollständige Autonomie hinsichtlich der Gewinnung kartographischer Daten zum aktuellen Einsatzraum.
- die kartographische Darstellung des Einsatzraums kann sehr schnell gewonnen werden (Stunden- oder Substundenbereich). Lange Warte- und Bearbeitungszeiten beim Einsatz von Spezialeinheiten werden vermieden.
- der gerätetechnische Aufwand bleibt gering. Zusätzlich zu der Standardausrüstung der Gruppe wird lediglich eine Mikrodrohne mit GPS-, Lagesensor und Digitalkamera sowie eine Auswertesoftware benötigt. Die Realisierung ist weitgehend mit kommerziellen Standard-Produkten (COTS-Produkte) möglich, so dass die Kosten gering gehalten werden.

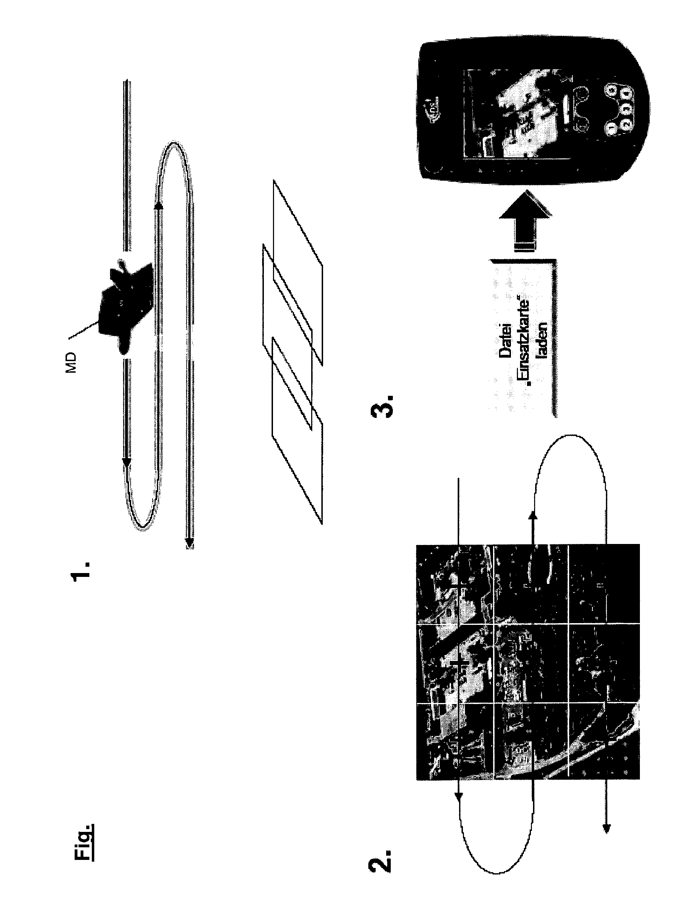

Die Erfindung wird im folgenden anhand eines konkreten Ausführungsbeispiels erläutert. Die einzige Figur zeigt hierzu den Verfahrensablauf anhand mehrerer aufeinander folgender Einzelschritte.

Schritt 1 in der Figur zeigt, wie zunächst die Einsatzraumdaten beschafft werden. Dazu wird von der Einsatzgruppe vor Ort die Mikrodrohe gestartet. Dies kann z.B. per Handstart erfolgen. Die Mikrodrohne ist neben einem Flugregelungssystem insbesondere mit einem Positionssensor (bevorzugt GPS-Sensor), einem Lagesensor sowie einer optischen Digitalkamera ausgestattet. Derartige Mikrodrohnen haben typischerweise folgende Eigenschaften:
Spannweite: kleiner 3m, insbesondere kleiner 50cm,
Gewicht: geringer als 5 kg, insbesondere geringer als 1 kg,
Geschwindigkeiten zwischen 30 und 100 km/h.

Typische Vertreter sind die **Black Widow** der Fa. AeroVironment, sowie die **Do-MAV** der Fa. EADS Deutschland GmbH. Die letztgenannte Do-MAV, die für das erfindungsgemäße Verfahren besonders geeignet ist, weist folgende Charakteristiken auf:
Spannweite: 42 cm
Gewicht: weniger als 500g
Einsatzdauer: weniger als 30 Min
Reichweite: größer als 1500 m
Elektroantrieb.

Die erfindungsgemäß eingesetzte Drohne ist frei programmierbar. Die Programmierung erfolgt derart, dass die Drohne den gesamten darzustellenden Einsatzraum abfliegt, um eine lückenlose Erfassung mittels der Digitalkamera zu ermöglichen. Bevorzugt ist die Flugroute mäanderförmig ausgebildet. Typische Dimensionen eines darzustellenden Einsatzraums liegen im Bereich von 1 bis 10 km², z.B. eine Fläche von 2 x 2 km.

Die Mikrodrohne ist während des Fluges völlig autonom, d.h. es besteht während des Flugs keine Verbindung zum Boden, und zwar weder zur Steuerung noch zur Datenübertragung. Nach Beendigung der Mission kehrt die Drohne selbständig zum Ausgangspunkt zurück.

Als Digitalkamera wird ein kleines, kommerziell erhältliches Kameramodul mit relativ geringer Auflösung (z.B. VGA) verwendet, welches direkt vom Flugrechner der Drohne angesteuert wird. Da Zweck des erfindungsgemäßen Verfahrens nicht die Erzeugung eines möglichst hochaufgelösten Luftbilds, sondern die Erstellung eines georeferenzierten Luftbildes als Ersatz für eine digitale Karte ist, werden an die Auflösung der Kamera keine besonderen Anforderungen gestellt.

Um Verzerrungen bei der späteren Integration der Einzelbilder zu einem Gesamtbild möglichst zu vermeiden, ist die Digitalkamera an der Mikrodrohne derart fixiert, dass sie bei normaler Fluglage senkrecht nach unten gerichtet ist.

Beim Abfliegen des darzustellenden Einsatzraums werden fortlaufend Aufnahmen gemacht, um den Einsatzraum lückenlos abzudecken. Die Bilddaten sowie die zugehörigen Lage- und Positionsdaten werden in einem bordseitigen Speicher gespeichert.

Die Flughöhe kann so vorprogrammiert werden, dass sowohl Bilder mit ausreichender Auflösung entstehen, als auch die Drohne genügend Höhenabstand zu Hindernissen hat und nebenbei die optische und akustische Signatur so klein gehalten wird, dass eine Entdeckung, Ortung und Bekämpfung weitgehend verhindert wird. Eine typische Flughöhe ist z.B. 150 m.

Die in einer Speicherkarte der Mikrodrohe gesammelten Bild-, Lage- und Positionsdaten werden in einem mobilen Rechner (handelsüblicher Laptop) überspielt und zu einem Gesamtluftbild des Einsatzraums zusammengesetzt, geographisch referenziert, und in das in einem mobilen Navigationsgerät benötigte Datenformat konvertiert (Schritt 2 in der Figur) In dem mobilen Navigationssystem ist das so erzeugte georeferenzierte Luftbild wie eine digitale Karte einsetzbar und kann diese weitgehend ersetzten.

Die wesentlichen Vorgänge in der Softwareverarbeitung sind dabei:
- Auslesen der Lage-, GPS- und Bilddaten
- Kombination der einzelnen Digitalbilder unter Verwendung der Lage- und GPS-Daten zu einer vollständigen Wiedergabe des Einsatzraums. Schritt 2 in der Figur zeigt schematisch das Zusammensetzen der Einzelbilder, die entlang einer mäanderförmigen Flugroute erzeugt worden sind. Dabei ist auf eine ausreichende Georeferenzierung und Entzerrung zu achten. Unter Beachtung der zugehörigen Lage- und GPS-Daten werden benachbarte Bereiche des Einsatzraums darstellende Einzelbilder nach der Methode des Photo-Stitching an ihren Rändern aneinandergelegt, so dass sich ein Bildteppich als lückenlose Darstellung des Einsatzraums ergibt.
- Abspeicherung des Gesamtbilds des Einsatzraums in dem für die Verwendung im mobilen Navigationsgerät notwendigen Datenformat.

Im Schritt 3 der Figur wird das georeferenzierte Gesamtbild des Einsatzraums in das persönliche mobile Navigationssystem der Mitglieder der militärischen Einheit geladen. Diese Geräte haben typischerweise die Form und Größe eines PDA (siehe z.B. WO02/42717 A2 oder GB 2 298 539 A) und weisen einen GPS-Receiver sowie einen Kompass auf. In dem mobilen Navigationssystem kann das georeferenzierte Gesamtbild nach Art einer echten digitalen Karte verwendet werden.

## Patentansprüche

1. Verfahren zur autonomen Beschaffung einer kartografischen Darstellung des Einsatzraumes einer militärischen Einheit, mit folgenden Verfahrensschritten:
- die militärische Einheit startet eine Mikrodrohne (MD), ausgestattet mit Lage- und Positionssensor, welche autonom entlang einer vorprogrammierten Flugroute den darzustellenden Einsatzraum abfliegt, wobei mit einer senkrecht nach unten gerichteten optischen Digitalkamera in aufeinander folgenden Aufnahmen der Einsatzraum lückenlos erfasst wird,
- nach selbständiger Rückkehr der Mikrodrohne (MD) an den Ausgangspunkt werden die von der Mikrodrohne gesammelten Daten vor Ort in einen tragbaren Rechner eingelesen und unter Verwendung der Lage- und Positionsdaten zu einem georeferenzierten Gesamtbild des Einsatzraums zusammengesetzt,
- das georeferenzierte Gesamtbild des Einsatzraums wird in das persönliche mobile Navigationssystem einer oder mehrerer Mitglieder der militärischen Einheit geladen, in dem es in gleicher Weise wie eine digitale Karte nutzbar ist.

2. Verfahren nach Anspruch 1, **dadurch gekennzeichnet, dass** die vorprogrammierte Flugroute der Mikrodrohne mäanderförmig ist.

3. Verfahren nach Anspruch 1 oder 2, **dadurch gekennzeichnet, dass** der darzustellende Einsatzraum eine Größe von 1 bis 50 km² aufweist.
